# EUROPEAN PATENT APPLICATION

(11) **EP 4 708 975 A1**
(43) Date of publication of application: **11.03.2026**
(21) Application number: 23935668.6
(22) Date of filing: 04.05.2023
(51) Int. Cl.: H04W 52/02

(54) **SLEEP MECHANISM NEGOTIATION METHOD, ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/092099
(87) International publication number: WO 2024/227295

(57) **Abstract**

The embodiments of the present disclosure relate to the technical field of mobile communications. Provided are a sleep mechanism method, an electronic device and a storage medium. The sleep mechanism method is applied to a station device (STA). The method comprises: receiving a first radio frame, which is sent by a first AP, wherein the first radio frame comprises first identification information, the first identification information identifies first MAX BSS idle period parameter information of the first AP and second MAX BSS idle period parameter information of a second AP, and the first AP and the second AP belong to different physical entities; and after the STA establishes an initial association with the first AP, a first MAX BSS idle period timer performing timing, and a second MAX BSS idle period timer not performing timing. Provided in the embodiments of the present disclosure is a mechanism for supporting the power saving of an STA.

## Description

### TECHNICAL FIELD

The embodiments of the present disclosure relate to the field of mobile communication technologies. Specifically, the embodiments of the present disclosure relate to a sleep mechanism negotiation method, an electronic device, and a storage medium.

### BACKGROUND

Currently, what Wi-Fi technology researches includes, for example, Ultra High Reliability (UHR), with the goal of improving reliability of Wireless Local Area Network (WLAN) connectivity, reducing latency, increasing manageability, increasing throughput at different Signal to Noise Ratio (SNR) levels, and reducing device-level power consumption, etc.

In UHR, a STA may transition between multiple AP devices or AP MLDs. Therefore, in UHR, it is necessary to further enhance the power saving mechanism and provide a mechanism to support power saving of the STA device.

### SUMMARY

Embodiments of the present disclosure provide a sleep mechanism negotiation method, an electronic device, and a storage medium to provide a mechanism to support power saving of the STA device.

In an aspect, an embodiment of the present disclosure provides a sleep mechanism negotiation method, which is applied to a station STA, and the method includes:
receiving a first wireless frame sent by a first AP; where the first wireless frame includes first identification information, the first identification information identifies first BSS maximum idle period parameter information of the first AP and second BSS maximum idle period parameter information of a second AP; where the first AP and the second AP belong to different physical entities; and
after the STA establishes an initial association with the first AP, the first MAX BSS idle period timer performs timing, and the second MAX BSS idle period timer does not perform timing.

In another aspect, an embodiment of the present disclosure further provides a sleep mechanism negotiation method, which is applied to a first AP, and the method includes:
determining a first wireless frame; where the first wireless frame includes first identification information, the first identification information identifies a first MAX BSS idle period parameter of the first AP and a second MAX BSS idle period parameter of a second AP;
where the first AP and the second AP belong to different physical entities; after a station (STA) establishes an initial association with the first AP, a first MAX BSS idle period timer performs timing, and a second MAX BSS idle period timer does not perform timing; and
sending the first wireless frame.

In another aspect, an embodiment of the present disclosure further provides an electronic device, which is a STA, and the electronic device includes:
a receiving module, configured to receive a first wireless frame sent by a first AP; where the first wireless frame includes first identification information, the first identification information identifies first BSS maximum idle period parameter information of the first AP and second BSS maximum idle period parameter information of a second AP; and the first AP and the second AP belong to different physical entities;
a timing module, configured to cause a first MAX BSS idle period timer to perform timing and a second MAX BSS idle period timer not to perform timing after the STA establishes an initial association with the first AP.

In another aspect, an embodiment of the present disclosure further provides an electronic device, which is a first AP, and the electronic device includes:
a determination module, configured to determine a first wireless frame, where the first wireless frame includes first identification information, the first identification information identifies a MAX BSS idle period parameter of the first AP and a MAX BSS idle period parameter of a second AP;
where the first AP and the second AP belong to different physical entities; after the STA establishes an initial association with the first AP, a first MAX BSS idle period timer performs timing, and a second MAX BSS idle period timer does not perform timing; and
a sending module, configured to send the first wireless frame.

An embodiment of the present disclosure further provides an electronic device, including a memory, a processor, and a computer program that is stored in the memory and executable on the processor, and the processor, when executing the program, implements the method in one or more of the embodiments of the present disclosure.

An embodiment of the present disclosure further provide a computer-readable storage medium having a computer program stored thereon, and the computer program, when being executed by a processor, implements the method in one or more of the embodiments of the present disclosure.

In the embodiments of the present disclosure, the first AP and the second AP belong to different physical entities, the STA can obtain, through the first wireless frame received from the first AP, both the first BSS maximum idle period parameter information of the first AP and the second BSS maximum idle period parameter information of the second AP identified by the first identification information in the first wireless frame, and after the STA establishes an initial association with the first AP, timing is performed through the first MAX BSS idle period timer and is not performed through the second MAX BSS idle period timer, so that the second MAX BSS idle period timer is put to sleep. In this way, by standardizing the MAX BSS idle period transmission mechanism, the spectrum utilization is improved, the power consumption required for the STA to separately obtain the BSS maximum idle period parameter information of each AP is reduced, and the communication consumption required to re-obtain the second BSS maximum idle period parameter information of the second AP after the STA establishes an initial association with the second AP is avoided. The embodiments of the present disclosure provide a mechanism to support power saving of the STA device.

### BRIEF DESCRIPTION OF THE DRAWINGS

In order to more clearly illustrate the technical solutions of the embodiments of the present disclosure, the drawings used in the description of the embodiments of the present disclosure will be briefly introduced below. Obviously, the drawings described below are only some embodiments of the present disclosure, and for those of ordinary skill in the art, other drawings can be obtained based on these drawings without any creative work.
FIG. 1a is a schematic diagram of a first example of an embodiment of the present disclosure;
FIG. 1b is a schematic diagram of a second example of an embodiment of the present disclosure;
FIG. 2 is a first flowchart of a sleep mechanism negotiation method provided in an embodiment of the present disclosure;
FIG. 3 is a second flowchart of a sleep mechanism negotiation method provided in an embodiment of the present disclosure;
FIG. 4 is a first schematic structural diagram of an electronic device provided in an embodiment of the present disclosure;
FIG. 5 is a second schematic structural diagram of an electronic device provided in an embodiment of the present disclosure; and
FIG. 6 is a third schematic structural diagram of an electronic device provided in an embodiment of the present disclosure.

### DETAILED DESCRIPTION

Illustrative embodiments will be described in detail herein, examples of which are illustrated in the accompanying drawings. In the following description, unless otherwise indicated, like numbers in different figures represent the same or similar elements. The embodiments described in the following illustrative embodiments are not intended to represent all possible embodiments consistent with the present disclosure. Rather, they are merely examples of apparatus and methods consistent with certain aspects of the present disclosure, as detailed in the appended claims.

In the embodiments of the present disclosure, the terms used are only for the purpose of describing specific embodiments and are not intended to limit the present disclosure. The singular forms "a", "said" and "the" used in the present disclosure and the appended claims are also intended to include plural forms, unless the context clearly indicates otherwise. It should also be understood that the term "and/or" used herein refers to and includes any or all possible combinations of one or more associated listed items. For example, A and/or B can mean: A exists alone, A and B exist at the same time, and B exists alone. The character "/" generally indicates that the associated objects before and after this character are in an "or" relationship. The term "a plurality of' refers to two or more. In view of this, "a plurality of" can also be understood as "at least two" in the embodiments of the present disclosure.

It should be understood that although the terms first, second, third, etc. may be used in this disclosure to describe various information, such information should not be limited to these terms. These terms are only used to distinguish information of the same type from each other. For example, without departing from the scope of the present disclosure, the first information may also be referred to as the second information, and similarly, the second information may also be referred to as the first information. Depending on the context, for example, the word "if" as used herein may be interpreted as "at the time of" or "when" or "in response to determining".

The technical solutions in the embodiments of the present disclosure will be clearly and completely described below with reference to the accompanying drawings in the embodiments of the present disclosure. Obviously, the described embodiments are only part of the embodiments of the present disclosure, and are not all of the embodiments. All other embodiments obtained by a person of ordinary skill in the art based on the embodiments of the present disclosure without creative efforts shall fall within the protection scope of the present disclosure.

The present disclosure provides a sleep mechanism negotiation method, an electronic device, and a storage medium to provide a mechanism for supporting power saving of the STA device so as to meet the transmission requirements of UHR. The method and device are based on the same inventive concept, and since the principles for the method and device to solve the problems are similar, the implementations of the device and method can refer to each other, and the repeated parts will be omitted.

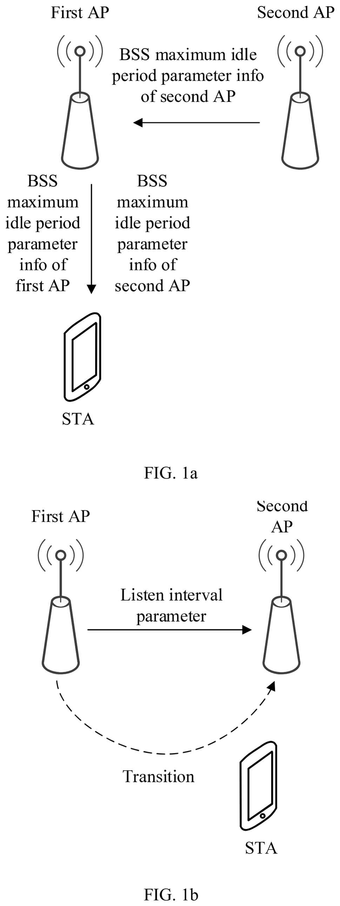

Refer to FIG. 1a and FIG. 1b, which illustrate examples of an application scenario of a sleep mechanism negotiation method provided by an embodiment of the present disclosure.

In the application scenarios shown in FIG. 1a and FIG. 1b, a first AP may be affiliated with a first AP MLD, and a second AP may be affiliated with a second AP MLD. The number of the second APs may include one or more (the number of the second APs in FIG. 1 is only an example and does not constitute a limitation). The second AP and the first AP belong to different physical entities. Optionally, the second AP may be within a certain location range or coverage range from the first AP, so that the first AP can obtain parameter information of the second AP (for example, BSS maximum idle period parameter information of the second AP). A STA is affiliated with a non-AP MLD, and the STA and can establish a communication connection with the first AP, and can also establish a communication connection with the second AP.

As a first example, as shown in FIG. 1a, when the STA establishes an initial association with a first AP, the STA may receive a first wireless frame sent by the first AP. The first wireless frame includes first identification information, and the first identification information identifies first basic service set (BSS) maximum idle period parameter information, and second BSS maximum idle period parameter information of the second AP obtained by the first AP.

Optionally, if the first AP is affiliated with a first AP MLD, the initial association established between the STA and the first AP may be a multi-link connection (i.e., ML).

The BSS maximum idle period, i.e., BSS MAX idle period, is also called a MAX BSS idle period in the embodiments of the present disclosure. Optionally, if an AP is affiliated with a certain AP MLD, the BSS MAX idle period corresponding to this AP is at MLD level (multi-link device level).

In this way, in a multi-link scenario, the STA can obtain both the first BSS maximum idle period parameter information of the first AP and the second BSS maximum idle period parameter information of the second AP when establishing the initial association with the first AP, avoiding the communication consumption required to obtain the BSS maximum idle period parameter information corresponding to each AP separately when establishing the initial association with each AP separately.

As an option, the first identification information includes a MAX BSS idle period information element, when the first MAX BSS idle period parameter is the same as the second MAX BSS idle period parameter, the first identification information includes a MAX BSS idle period information element, and when the first MAX BSS idle period parameter is different from the second MAX BSS idle period parameter, the first identification information includes a MAX BSS idle period information element corresponding to each MAX BSS idle period parameter.

In this way, when the first MAX BSS idle period parameter is the same as the second MAX BSS idle period parameter, only one MAX BSS idle period information element is transmitted, which can save transmission bandwidth and improve spectrum utilization.

As an option, after the STA establishes the initial association with the first AP, the first MAX BSS idle period timer performs timing, and the second MAX BSS idle period timer does not perform timing. After the STA transitions from the first AP to the second AP, the second MAX BSS idle period timer performs timing, and the first MAX BSS idle period timer stops timing.

In this way, after the STA establishes an initial association with an AP, only the MAX BSS idle period timer corresponding to the AP with which the initial association is established performs timing, and the MAX BSS idle period timers corresponding to other APs do not perform timing, that is, the MAX BSS idle period timers corresponding to the other APs are put to sleep, thereby realizing a power saving mechanism for the STA device.

As a second example, as shown in FIG. 1b, before the STA receives the first wireless frame sent by the first AP, the STA may also determine a second wireless frame, where the second wireless frame includes a listen interval parameter, the time indicated by the listen interval parameter is less than the time indicated by the first MAX BSS idle period parameter and the second MAX BSS idle period parameter; and the STA sends the second wireless frame to the first AP.

In this way, by setting the time indicated by the listen interval parameter to be less than the times indicated by the first MAX BSS idle period parameter and the second MAX BSS idle period parameter, the STA can, without disconnecting from the AP associated with the STA, fully utilize the listen interval mechanism to receive the beacon broadcast by the AP, decode the TIM in the beacon, and perform subsequent operations based on the decoded TIM, which saves the STA power.

As an option, the listen interval parameter is sent to the second AP through the first AP, and after the STA establishes the initial association with the first AP, the listen interval timer corresponding to the first AP performs timing, and the listen interval timer corresponding to the second AP does not perform timing. After the STA transitions from the first AP to the second AP, the listen interval timer corresponding to the second AP performs timing, and the listen interval timer corresponding to the first AP stops timing.

In this way, the listen interval parameter is sent to the second AP through the first AP, and a listen interval timer corresponding to an AP is set to perform timing after the STA establishes the initial association with this AP, and listen interval timers corresponding to other APs are set not to perform timing. That is, the listen interval timers corresponding to other APs sleep, realizing a power saving mechanism for the STA device.

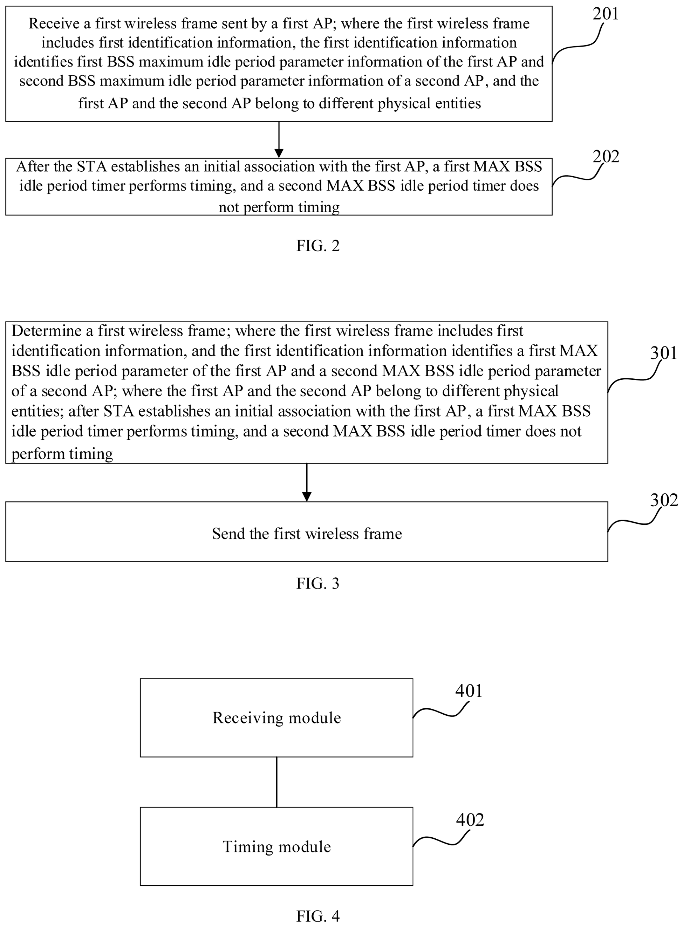

As shown in FIG. 2, an embodiment of the present disclosure provides a sleep mechanism negotiation method, which is applied to a station (STA). The method may include the following steps:
receiving a first wireless frame sent by a first AP; where the first wireless frame includes first identification information, the first identification information identifies first BSS maximum idle period parameter information of the first AP and second BSS maximum idle period parameter information of a second AP, and the first AP and the second AP belong to different physical entities;
after the STA establishes an initial association with the first AP, a first MAX BSS idle period timer performs timing, and a second MAX BSS idle period timer does not perform timing.

In the embodiments of the present disclosure, the first AP and the second AP may be affiliated APs of the same AP MLD or different AP MLDs, or may be different AP MLDs or independent APs, which are not limited herein. Optionally, the first AP is affiliated with a first AP MLD, and the second AP is affiliated with a second AP MLD. The second AP may be within a certain location range or coverage range from the first AP, so that the first AP can obtain parameter information of the second AP. For example, the first AP can obtain the second BSS maximum idle period parameter information of the second AP.

The STA in the embodiments of the present disclosure may be an independent STA that is not affiliated with any MLD, or may be a STA affiliated with a non-AP MLD, which is not limited here.

The AP MLD can represent an access point that supports the multi-link communication function, and non-AP MLD can represent a station that supports the multi-link communication function.

The first wireless frame may be a beacon frame or a probe response frame, where the probe response frame may be an unsolicited probe response frame.

In the embodiments of the present disclosure, the BSS maximum idle period, i.e., BSS MAX idle period, may also be referred to as a MAX BSS idle period. The BSS maximum idle period may identify the maximum time duration that the AP supports for receiving keep alive probe packets sent by the STA associated with the AP without disconnecting from the STA associated with the AP.

During the process of establishing the initial association link with the first AP, the STA may receive the first wireless frame sent by the first AP, and the first wireless frame includes first identification information, which identifies first BSS maximum idle period parameter information of the first AP, and second BSS maximum idle period parameter information of the second AP that is received by the first AP. The first BSS maximum idle period parameter information and the second BSS maximum idle period parameter information may be collectively referred to as BSS maximum idle period parameter information.

In the case where the STA is a multi-link device (for example, non-AP MLD), the corresponding BSS maximum idle period is at the MLD level.

Specifically, one or more bits in the first wireless frame can be used as the first identification information to identify the first BSS maximum idle period parameter information or the second BSS maximum idle period parameter information. Optionally, the bit identification can include, but is not limited to, one or combination information of more than one of a BSS maximum idle period, a letter identifier corresponding to the BSS maximum idle period, and a number identifier corresponding to the BSS maximum idle period. For example, in a case where the BSS maximum idle period is 30 seconds, the corresponding BSS maximum idle period parameter information can be 30 seconds (i.e., the BSS maximum idle period), can be a (i.e., the letter a identifies the BSS maximum idle period of 30 seconds), or can be 1 (i.e., the number 1 identifies the BSS maximum idle period of 30 seconds). In this way, the first BSS maximum idle period parameter information and the second BSS maximum idle period parameter information can be determined from the bit identification in the first wireless frame, and operations such as data transmission can be performed based on the determined first BSS maximum idle period parameter information and second BSS maximum idle period parameter information.

In a case where the first BSS maximum idle period parameter information is the same as the second BSS maximum idle period parameter information, the STA can share the same BSS maximum idle period parameter information between the first AP and the second AP, that is, the STA can perform communication with the first AP based on the BSS maximum idle period parameter information, and when transitioning to any second AP, the STA can also perform communication with the second AP based on the same BSS maximum idle period parameter information.

In a case where the first BSS maximum idle period parameter information is different from the second BSS maximum idle period parameter information, the STA can perform communication with the first AP based on the BSS maximum idle period parameter information of the first AP, and when transitioning to any second AP, the STA performs communication with the second AP based on the BSS maximum idle period parameter information of the second AP.

After the STA establishes the initial association with the first AP, the first link established between the STA and the first AP may be considered to be in an active state, and the first MAX BSS idle period timer performs timing, the second link established between the STA and the second AP may be considered to be in an inactive state, and the second MAX BSS idle period timer does not perform timing, that is, the second MAX BSS idle period timer is put to sleep. If there are multiple second APs, the STA can establish a link with each of the second APs, resulting in multiple second links. In this case, each second link is in an inactive state.

In an embodiment of the present disclosure, the first AP and the second AP belong to different physical entities. The STA can simultaneously obtain, from the received first wireless frame that is sent by the first AP, the first BSS maximum idle period parameter information of the first AP and the second BSS maximum idle period parameter information of the second AP that are identified by the first identification information in the first wireless frame, and after the STA establishes the initial association with the first AP, the first MAX BSS idle period timer performs timing and the second MAX BSS idle period timer is put to sleep. In this way, by specifying the MAX BSS idle period transmission mechanism, the spectrum utilization is improved, the power consumption required for the STA to separately obtain the BSS maximum idle period parameter information of each AP is reduced, and the communication consumption required to re-obtain the second BSS maximum idle period parameter information of the second AP after the STA establishes the initial association with the second AP is avoided.

In the sleep mechanism negotiation method applied to the STA provided in the embodiments of the present disclosure, the first identification information includes a MAX BSS idle period information element;
when the first MAX BSS idle period parameter is the same as the second MAX BSS idle period parameter, the first identification information includes one MAX BSS idle period information element; and
when the first MAX BSS idle period parameter is different from the second MAX BSS idle period parameter, the first identification information includes a MAX BSS idle period information element corresponding to each MAX BSS idle period parameter.

In an embodiment of the present disclosure, the MAX BSS idle period information element includes an information element indicating the BSS maximum idle period field. The format of the MAX BSS idle period information element is as shown in Table 1 below:

**Table 1:**

| Information content | Element ID | Length | MAX idle period | Idle Options |
|---|---|---|---|---|
| Number of Octets | 1 | 1 | 2 | 1 |

As shown in Table 1, in the MAX BSS idle period information element, the element ID bit (Element ID) occupies one byte of the BSS MAX idle period information element, the length bit (Length) occupies one byte of the BSS MAX idle period information element, the maximum idle period bit (MAX idle period) occupies two bytes of the BSS MAX idle period information element, and the idle option bit (Idle Options) occupies one byte of the BSS MAX idle period information element. The field corresponding to the maximum idle period bit represents the BSS maximum idle period (that is, the time indicated by the MAX BSS idle period parameter).

In the embodiments of the present disclosure, by transmitting only one MAX BSS idle period information element when the first MAX BSS idle period parameter is the same as the second MAX BSS idle period parameter, transmission bandwidth can be saved and spectrum utilization can be improved when the first MAX BSS idle period parameter is the same as the second MAX BSS idle period parameter.

In the sleep mechanism negotiation method applied to the STA provided by the embodiments of the present disclosure, after the STA transitions from the first AP to the second AP, the second MAX BSS idle period timer performs timing, and the first MAX BSS idle period timer stops timing.

After the STA transitions from the first AP to the second AP, the second link established between the STA and the second AP can be considered to be in an active state, the second MAX BSS idle period timer performs timing, the first link established between the STA and the first AP can be considered to be in an inactive state, and the first MAX BSS idle period timer stops timing, that is, the first MAX BSS idle period timer is put to sleep.

In the embodiments of the present disclosure, after the STA establishes an initial association with an AP, only the MAX BSS idle period timer corresponding to the AP with which the initial association is established performs timing, and the MAX BSS idle period timers corresponding to other APs are put to sleep, thereby implementing a power saving mechanism for the STA device.

In the sleep mechanism negotiation method applied to the STA provided in an embodiment of the present disclosure, before receiving the first wireless frame sent by the first AP, the method may further include:
determining a second wireless frame, where the second wireless frame includes a listen interval parameter, the time indicated by the listen interval parameter is less than the time indicated by the first MAX BSS idle period parameter and the second MAX BSS idle period parameter; and
sending the second wireless frame.

In order to save STA's power, the STA can be in a sleep state. When STA is in the sleep state, the AP associated with the STA needs to buffer data frames for the STA. The sleeping STA will wake up periodically to listen to incoming messages to determine whether there is any frame buffered and access point in the AP associated with the STA. When STA is associated with the AP, it will record the listen interval. The listen interval parameter is actually sleep time calculated in units of the beacon interval (i.e., a period at which the AP broadcasts beacon frames).

The STA can freely selects an integer multiple of the beacon interval as its own listen interval, such as 10.

The STA receives the beacon broadcast by the AP every listen interval and decodes a traffic indication message (TIM) in the beacon. If the TIM indicates that there is no data frame buffered, the STA can immediately enter the doze state. If the TIM indicates that there is a data frame buffered, the STA will send a contention control packet poll to the AP. After receiving the poll, the AP can send to the source STA of the poll a data frame buffered for the STA.

The listen interval parameter may be carried in a designated field of the second wireless frame. The second wireless frame may be an association response frame or a reassociation response frame, or other message frames sent by the first AP during the process of establishing the initial association between the STA and the first AP. For example, the STA can carry a listen interval field in the association response frame or reassociation response frame.

Optionally, in a case where the STA is a multi-link device (for example, non-AP MLD), the listen interval field is at the MLD level.

In the embodiments of the present disclosure, the time indicated by the listen interval parameter is set to be less than the time indicated by the first MAX BSS idle period parameter and the second MAX BSS idle period parameter, so that the STA can, without disconnecting from the AP associated with the STA, fully use the listen interval mechanism to receive the beacon broadcast by the AP, decode the TIM in the beacon, and perform subsequent operations based on the decoded TIM, which saves the STA power.

In the sleep mechanism negotiation method applied to the STA provided in an embodiment of the present disclosure, the STA is affiliated with a non-AP MLD, and the listen interval parameter is sent to the second AP through the first AP;
after the STA establishes the initial association with the first AP, a listen interval timer performs timing, and a listen interval timer corresponding to the second AP does not perform timing.

Optionally, after the STA establishes the initial association with the first AP, if the STA is a device that supports multiple links, the first AP can send the listen interval parameter to the second AP through the multi-link connection (AP MLD) between the first AP and the second AP during the process of the STA establishing the initial association with the second AP, that is, in the multi-link communication process, the listen interval parameter is not changed across multiple APs.

After the STA establishes the initial association with the first AP, the first link established between the STA and the first AP can be considered to be in an active state, the listen interval timer corresponding to the first AP performs timing, and the listen interval timer corresponding to the second AP does not perform timing; the second link established between the STA and the second AP can be considered to be in an inactive state, and the second MAX BSS idle period timer does not perform timing, that is, the second MAX BSS idle period timer is put to sleep.

In the sleep mechanism negotiation method applied to the STA provided in an embodiment of the present disclosure, after the STA transitions from the first AP to the second AP, the listen interval timer corresponding to the second AP performs timing, and the listen interval timer corresponding to the first AP stops timing.

After the STA transitions from the first AP to the second AP, the second link established between the STA and the second AP can be considered to be in an active state, and the listen interval timer corresponding to the second AP performs timing, the first link established between the STA and the first AP is in an inactive state, and the listen interval timer corresponding to the first AP stops timing, that is, the listen interval timer corresponding to the first AP is put to sleep.

In the embodiments of the present disclosure, the listen interval parameter is sent to the second AP by the first AP, and a listen interval timer corresponding to an AP is set to perform timing after the STA establishes an initial association with the AP, and listen interval timers corresponding to other Aps are put to sleep, which implements a power saving mechanism for the STA device.

An embodiment of the present disclosure provides a sleep mechanism negotiation method. Optionally, the method may be applied to a station (STA). The method may include the following steps:
receiving a first wireless frame sent by a first AP; where the first wireless frame includes first identification information, the first identification information identifies first BSS maximum idle period parameter information of the first AP and second BSS maximum idle period parameter information of a second AP, and where the first AP and the second AP belong to different physical entities;
after the STA establishes an initial association with the first AP, a first MAX BSS idle period timer performs timing, and a second MAX BSS idle period timer does not perform timing.

Optionally, after the STA transitions from the first AP to the second AP, the second MAX BSS idle period timer performs timing, and the first MAX BSS idle period timer stops timing.

Optionally, before receiving the first wireless frame sent by the first AP, the method may further include:
determining a second wireless frame; where the second wireless frame includes a listen interval parameter, the time indicated by the listen interval parameter is less than the time indicated by the first MAX BSS idle period parameter and the second MAX BSS idle period parameter; and
sending the second wireless frame.

Optionally, the STA is affiliated with a non-AP MLD, and the listen interval parameter is sent to the second AP through the first AP; and
after the STA establishes the initial association with the first AP, a listen interval timer corresponding to the first AP performs timing, and a listen interval timer corresponding to the second AP does not perform timing.

Optionally, after the STA transitions from the first AP to the second AP, the listen interval timer corresponding to the second AP performs timing, and the listen interval timer corresponding to the first AP stops timing.

Optionally, the first identification information includes a MAX BSS idle period information element;
when the first MAX BSS idle period parameter is the same as the second MAX BSS idle period parameter, the first identification information includes a MAX BSS idle period information element; and
when the first MAX BSS idle period parameter is different from the second MAX BSS idle period parameter, the first identification information includes a MAX BSS idle period information element corresponding to each MAX BSS idle period parameter.

In an embodiment of the present disclosure, the first AP and the second AP belong to different physical entities. The STA can obtain, from the received first wireless frame sent by the first AP, both the first BSS maximum idle period parameter information of the first AP and the second BSS maximum idle period parameter information of the second AP identified by the first identification information in the first wireless frame., and after the STA establishes an initial association with the first AP, the first MAX BSS idle period timer performs timing, and the second MAX BSS idle period timer does not perform timing, so that the second MAX BSS idle period timer is put to sleep. In this way, by standardizing the MAX BSS idle period transmission mechanism, the spectrum utilization is improved, the power consumption required for the STA to separately obtain the BSS maximum idle period parameter information of each AP is reduced, and the communication consumption required to re-obtain the second BSS maximum idle period parameter information of the second AP after the STA establishes an initial association with the second AP is avoided.

Referring to FIG. 3, an embodiment of the present disclosure provides a sleep mechanism negotiation method, which is applied to a first AP, and the method may include the following steps:
determining a first wireless frame; where the first wireless frame includes first identification information, and the first identification information identifies a first MAX BSS idle period parameter of the first AP and a second MAX BSS idle period parameter of a second AP;
where the first AP and the second AP belong to different physical entities; after a station (STA) establishes an initial association with the first AP, a first MAX BSS idle period timer performs timing, and a second MAX BSS idle period timer does not perform timing; and
sending the first wireless frame.

In an embodiment of the present disclosure, the first AP and the second AP may be affiliated Aps of the same or different AP MLDs, or may be different AP MLDs or independent APs, which are not limited herein. Optionally, the second AP may be within a certain location range or coverage range from the first AP, such that the first AP can obtain parameter information of the second AP. For example, the first AP may obtain the second BSS maximum idle period parameter information of the second AP.

The STA in the embodiment of the present disclosure may be an independent STA that is not affiliated with any MLD, or may be an affiliated STA of a Non-AP MLD, which is not limited here.

The AP MLD can represent an access point that supports multi-link communication function, and non-AP MLD can represent a station that supports the multi-link communication function.

The first wireless frame may be a beacon frame or a probe response frame, where the probe response frame may be an unsolicited probe response frame. After determining the first wireless frame, the first wireless frame may be sent directly to the STA, or may be forwarded to the STA via other means (for example, via another AP that has established an initial association with the STA), so that the STA performs communication transmission based on the first identification information in the first wireless frame, thereby implementing a power saving mechanism for the STA.

In the embodiments of the present disclosure, the BSS maximum idle period, i.e., BSS MAX idle period, may also be referred to as a MAX BSS idle period. The BSS maximum idle period may identify the longest time duration that the AP supports for receiving keep alive probe packets sent by the STA associated with the AP without disconnecting from the STA associated with the AP. The maximum duration of an alive probe packet.

During the process of establishing the initial association connection with the first AP, the STA may receive the first wireless frame sent by the first AP. The first wireless frame includes the first identification information, which identifies the first BSS maximum idle period parameter information of the first AP, and the second BSS maximum idle period parameter information of the second AP received by the first AP. The first BSS maximum idle period parameter information and the second BSS maximum idle period parameter information may be collectively referred to as BSS maximum idle period parameter information.

In the case where the STA is a multi-link device (for example, non-AP MLD), the corresponding BSS maximum idle period is at the MLD level.

Specifically, one or more bits in the first wireless frame can be used as the first identification information to identify the first BSS maximum idle period parameter information or the second BSS maximum idle period parameter information. Optionally, the bit identification can include, but is not limited to, one or combination information of more than one of a BSS maximum idle period, a letter identifier corresponding to the BSS maximum idle period, and a number identifier corresponding to the BSS maximum idle period. For example, in a case where the BSS maximum idle period is 30 seconds, the corresponding BSS maximum idle period parameter information can be 30 seconds (i.e., the BSS maximum idle period), can be a (i.e., the letter a identifies the BSS maximum idle period of 30 seconds), or can be 1 (i.e., the number 1 identifies the BSS maximum idle period of 30 seconds). In this way, the first BSS maximum idle period parameter information and the second BSS maximum idle period parameter information can be determined from the bit identification in the first wireless frame, and operations such as data transmission can be performed based on the determined first BSS maximum idle period parameter information and second BSS maximum idle period parameter information.

In the case where the first BSS maximum idle period parameter information is the same as the second BSS maximum idle period parameter information, the same BSS maximum idle period parameter information may be indicated in the first identification information, i.e., indicating that the STA shares the same BSS maximum idle period parameter information between the first AP and the second AP. That is, it indicates that the STA can perform communication with the first AP based on the BSS maximum idle period parameter information, and when transitioning to any second AP, the STA can also perform communication with the second AP based on the same BSS maximum idle period parameter information.

In the case where the first BSS maximum idle period parameter information is different from the second BSS maximum idle period parameter information, the first identification information may indicate both the first BSS maximum idle period parameter information corresponding to the first AP and the second BSS maximum idle period parameter information corresponding to the second AP. That is, it indicates that the STA can perform communication with the first AP based on the BSS maximum idle period parameter information of the first AP, and when the STA transitions to any second AP, the STA can perform communication with the second AP based on the BSS maximum idle period parameter information of the second AP.

After the STA establishes the initial association with the first AP, the first link established between the STA and the first AP may be considered to be in an active state, the first MAX BSS idle period timer performs timing, the second link established between the STA and the second AP may be considered to be in an inactive state, and the second MAX BSS idle period timer does not perform timing, that is, the second MAX BSS idle period timer is put to sleep. If there are multiple second APs, the STA can establish a link with each second AP, and there are multiple second links. In this case, each second link is in an inactive state.

In the embodiment of the present disclosure, the first AP and the second AP belong to different physical entities, the AP determines and sends the first wireless frame, so that the device receiving the first wireless frame can obtain both the first BSS maximum idle period parameter information of the first AP and the second BSS maximum idle period parameter information of the second AP identified by the first identification information in the first wireless frame, and after the STA establishes the initial association with the first AP, the first MAX BSS idle period timer performs timing, and the second MAX BSS idle period timer does not perform timing, so that the second MAX BSS idle period timer is put to sleep. In this way, by standardizing the MAX BSS idle period transmission mechanism, the spectrum utilization is improved, the power consumption required for the STA to separately obtain the BSS maximum idle period parameter information of each AP is reduced, and the communication consumption required to re-obtain the second BSS maximum idle period parameter information of the second AP after the STA establishes the initial association with the second AP is avoided.

In the sleep mechanism negotiation method applied to the first AP provided in an embodiment of the present disclosure, the first identification information includes a MAX BSS idle period information element;
when the first MAX BSS idle period parameter is the same as the second MAX BSS idle period parameter, the first identification information includes a MAX BSS idle period information element; and
when the first MAX BSS idle period parameter is different from the second MAX BSS idle period parameter, the first identification information includes a MAX BSS idle period information element corresponding to each MAX BSS idle period parameter.

In an embodiment of the present disclosure, the MAX BSS idle period information element includes an information element indicating a BSS maximum idle period field. The format of the MAX BSS idle period information element is as shown in Table 1 above.

Specifically, in the MAX BSS idle period information element, the element ID occupies one byte in the BSS MAX idle period information element, the length occupies one byte in the BSS MAX idle period information element, the maximum idle period occupies two bytes in the BSS MAX idle period information element, and the idle options occupies one byte in the BSS MAX idle period information element. The field corresponding to the maximum idle period represents the BSS maximum idle period (i.e., the time indicated by the MAX BSS idle period parameter).

In the embodiments of the present disclosure, by transmitting only one MAX BSS idle period information element when the first MAX BSS idle period parameter is the same as the second MAX BSS idle period parameter, transmission bandwidth can be saved and spectrum utilization can be improved when the first MAX BSS idle period parameter is the same as the second MAX BSS idle period parameter.

In the sleep mechanism negotiation method applied to the first AP provided in an embodiment of the present disclosure, after the STA transitions from the first AP to the second AP, the second MAX BSS idle period timer performs timing and the first MAX BSS idle period timer stops timing.

After the STA transitions from the first AP to the second AP, the second link established between the STA and the second AP can be considered to be in an active state, the second MAX BSS idle period timer performs timing, the first link established between the STA and the first AP can be considered to be in an inactive state, and the first MAX BSS idle period timer stops timing, that is, the first MAX BSS idle period timer is put to sleep.

In the embodiments of the present disclosure, after the STA establishes an initial association with an AP, only the MAX BSS idle period timer corresponding to the AP with which the initial association is established performs timing, and the MAX BSS idle period timers corresponding to other APs are put to sleep, which implements a power saving mechanism for the STA device.

In the sleep mechanism negotiation method applied to the first AP provided in an embodiment of the present disclosure, before determining the first wireless frame sent by the first AP, the method may further include:
receiving a second wireless frame sent by the STA; where the second wireless frame includes a listen interval parameter, and the time indicated by the interval parameter is less than the time indicated by the first MAX BSS idle period parameter and the second MAX BSS idle period parameter.

In order to save STA's power, the STA can be in a sleep state. When the STA is in the sleep state, the AP associated with the STA needs to buffer data frames for it. The STA in the sleep state will wake up periodically to listen to incoming messages to determine whether there is a frame buffered and access point in the AP associated with the STA. When the STA is associated with AP, it will record the listen interval. The listen interval parameter is actually sleep time calculated in units of the beacon interval (i.e., a period at which the AP broadcasts beacon frames).

The STA can freely select an integer multiple of the beacon interval as its own listen interval, such as 10.

The STA receives the beacon broadcast by the AP every listen interval, and decodes a traffic indication message (TIM) in the beacon. If the TIM indicates that there is no data frame buffered, the STA can immediately enter a doze state. If the TIM indicates that there is a data frame buffered, the STA will send a contention control packet poll to the AP. After receiving the poll, the AP can send to the source STA of the poll a data frame buffered for the STA.

The listen interval parameter may be carried in a designated field of the second wireless frame. The second wireless frame may be an association response frame or a reassociation response frame, or may be other message frames sent by the first AP during the process of the STA establishing the initial association with the first AP. For example, the STA can carry the listen interval field in the association response frame or reassociation response frame.

Optionally, if the STA is a multi-link device (for example, non-AP MLD), the listen interval field is at the MLD level.

In the embodiments of the present disclosure, the time indicated by the listen interval parameter is set to be less than the time indicated by the first MAX BSS idle period parameter and the second MAX BSS idle period parameter, so that the STA can, without disconnecting from the AP associated with the STA, fully utilize the listen interval mechanism to receive the beacon broadcast by the AP, decode the TIM in the beacon, and perform subsequent operations based on the decoded TIM, which saves the STA power.

In the sleep mechanism negotiation method applied to the first AP provided in an embodiment of the present disclosure, the STA is affiliated with a non-AP MLD; and the listen interval parameter is sent to the second AP; and
after the STA establishes the initial association with the first AP, a listen interval timer corresponding to the first AP performs timing, and a listen interval timer corresponding to the second AP does not perform timing.

Optionally, after the STA establishes the initial association with the first AP, if the STA is a multi-link device, the first AP can send the listen interval parameter to the second AP through the multi-link connection (AP MLD) between the first AP and the second AP during the process of the STA establishing the initial association with the second AP, that is, in the multi-link communication process, the listen interval parameter is not changed across multiple APs.

After the STA establishes the initial association with the first AP, the first link established between the STA and the first AP can be considered to be in an active state, the listen interval timer corresponding to the first AP performs timing, and the listen interval timer corresponding to the second AP does not perform timing; the second link established between the STA and the second AP can be considered to be in an inactive state, and the second MAX BSS idle period timer does not perform timing, that is, the second MAX BSS idle period timer is put to sleep.

In the sleep mechanism negotiation method applied to the STA provided in an embodiment of the present disclosure, after the STA transitions from the first AP to the second AP, the listen interval timer corresponding to the second AP performs timing, and the listen interval timer corresponding to the first AP stops timing.

After the STA transitions from the first AP to the second AP, the second link established between the STA and the second AP can be considered to be in an active state, and the listen interval timer corresponding to the second AP performs timing, the first link established between the STA and the first AP is in an inactive state, and the listen interval timer corresponding to the first AP stops timing, that is, the listen interval timer corresponding to the first AP is put to sleep.

In the embodiments of the present disclosure, the listen interval parameter is sent to the second AP by the first AP, and a listen interval timer corresponding to an AP is set to perform timing after the STA establishes an initial association with the AP, and listen interval timers corresponding to other Aps are put to sleep, which implements a power saving mechanism for the STA device.

An embodiment of the present disclosure provides a sleep mechanism negotiation method, which can be applied to a first AP, and the method may include the following steps:
determining a first wireless frame; where the first wireless frame includes first identification information, and the first identification information identifies a first MAX BSS idle period parameter of the first AP and a second MAX BSS idle period parameter of a second AP;
where the first AP and the second AP belong to different physical entities; after a station (STA) establishes an initial association with the first AP, a first MAX BSS idle period timer performs timing, and a second MAX BSS idle period timer does not perform timing; and
sending the first wireless frame.

Optionally, after the STA transitions from the first AP to the second AP, the second MAX BSS idle period timer performs timing, and the first MAX BSS idle period timer stops timing.

Optionally, before determining the first wireless frame sent by the first AP, the method may further include:
receiving a second wireless frame sent by the STA; where the second wireless frame includes a listen interval parameter, and the time indicated by the interval parameter is less than the time indicated by the first MAX BSS idle period parameter and the second MAX BSS idle period parameter.

Optionally, the STA is affiliated with a non-AP MLD; and the listen interval parameter is sent to the second AP;
after the STA establishes the initial association with the first AP, a listen interval timer corresponding to the first AP performs timing, and a listen interval timer corresponding to the second AP does not perform timing.

Optionally, after the STA transitions from the first AP to the second AP, the listen interval timer corresponding to the second AP performs timing, and the listen interval timer corresponding to the first AP stops timing.

Optionally, the first identification information includes a MAX BSS idle period information element;
when the first MAX BSS idle period parameter is the same as the second MAX BSS idle period parameter, the first identification information includes a MAX BSS idle period information element; and
when the first MAX BSS idle period parameter is different from the second MAX BSS idle period parameter, the first identification information includes a MAX BSS idle period information element corresponding to each MAX BSS idle period parameter.

In the embodiment of the present disclosure, the first AP and the second AP belong to different physical entities, the AP determines and sends the first wireless frame, so that the device receiving the first wireless frame can obtain both the first BSS maximum idle period parameter information of the first AP and the second BSS maximum idle period parameter information of the second AP identified by the first identification information in the first wireless frame, and after the STA establishes the initial association with the first AP, the first MAX BSS idle period timer performs timing, and the second MAX BSS idle period timer does not perform timing, so that the second MAX BSS idle period timer is put to sleep. In this way, by standardizing the MAX BSS idle period transmission mechanism, the spectrum utilization is improved, the power consumption required for the STA to separately obtain the BSS maximum idle period parameter information of each AP is reduced, and the communication consumption required to re-obtain the second BSS maximum idle period parameter information of the second AP after the STA establishes the initial association with the second AP is avoided.

Referring to FIG. 4, based on the same principle as the methods provided in the embodiments of the present disclosure, the embodiments of the present disclosure further provide an electronic device, the electronic device is a STA, and the electronic device includes:
a receiving module 401, configured to receive a first wireless frame sent by a first AP; where the first wireless frame includes first identification information, and the first identification information identifies first BSS maximum idle period parameter information of the first AP and second BSS maximum idle period parameter information of a second AP; where the first AP and the second AP belong to different physical entities; and
a timing module 402, configured to cause a first MAX BSS idle period timer to perform timing and a second MAX BSS idle period timer not to perform timing after the STA establishes an initial association with the first AP.

The embodiments of the present disclosure also provide a sleep mechanism negotiation apparatus, which is applied to a STA, and the apparatus includes:
a wireless frame receiving module, configured to receive a first wireless frame sent by a first AP; where the first wireless frame includes first identification information, and the first identification information identifies first BSS maximum idle period parameter information of the first AP and second BSS maximum idle period parameter information of a second AP; where the first AP and the second AP belong to different physical entities; and
a timing module, configured to cause a first MAX BSS idle period timer to perform timing and a second MAX BSS idle period timer not to perform timing after the STA establishes an initial association with the first AP.

The apparatus also includes other modules of the electronic device in the above embodiments, which will not be described in detail here.

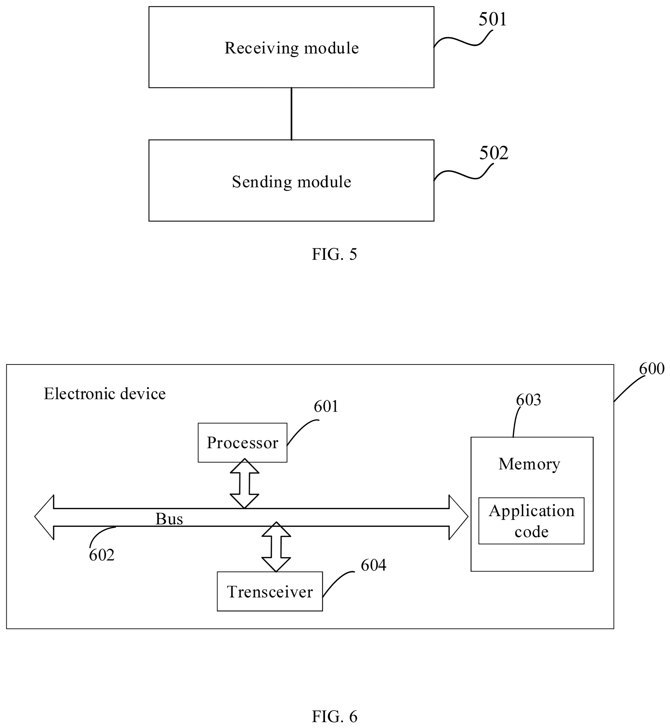

Referring to FIG. 5, based on the same principle as the methods provided in the embodiments of the present disclosure, the embodiments of the present disclosure further provide an electronic device, the electronic device is a first AP, and the electronic device includes:
a determining module 501, configured to determine a first wireless frame; where the first wireless frame includes first identification information, and the first identification information identifies a MAX BSS idle period parameter of the first AP and a MAX BSS idle period parameter of a second AP;
where the first AP and the second AP belong to different physical entities; after a STA establishes an initial association with the first AP, a first MAX BSS idle period timer performs timing, and a second MAX BSS idle period timer does not perform timing; and
a sending module 502, configured to send the first wireless frame.

The embodiments of the present disclosure also provide a sleep mechanism negotiation apparatus, which is applied to a first AP, and the apparatus includes:
a wireless frame determination module, configured to determine a first wireless frame, where the first wireless frame includes first identification information, and the first identification information identifies a MAX BSS idle period parameter of the first AP and a MAX BSS idle period parameter of a second AP;
where the first AP and the second AP belong to different physical entities; after a STA establishes an initial association with the first AP, a first MAX BSS idle period timer performs timing, and a second MAX BSS idle period timer does not perform timing; and
a wireless frame sending module, configured to send the first wireless frame.

The apparatus also includes other modules of the electronic device in the above embodiments, which will not be described in detail here.

In an optional embodiment, the embodiment of the present disclosure further provides an electronic device, as shown in FIG. 6. The electronic device 600 shown in FIG. 6 may be a server, and includes a processor 601 and a memory 603. The processor 601 and the memory 603 are connected with each other, for example, via a bus 602. Optionally, the electronic device 600 may further include a transceiver 604. It should be noted that in actual applications, the number of transceivers 604 is not limited to one, and the structure of the electronic device 600 does not constitute a limitation on the embodiments of the present disclosure.

The processor 601 can be a CPU (Central Processing Unit), a general-purpose processor, a DSP (Digital Signal Processor), an ASIC (Application Specific Integrated Circuit), an FPGA (Field Programmable Gate Array), or other programmable logic device, transistor logic device, hardware component, or any combination thereof. It can implement or execute the various illustrative logic blocks, modules, and circuits described in conjunction with the present disclosure. The processor 601 can also be a combination that implements computing functions, such as a combination of one or more microprocessors, a combination of a DSP and a microprocessor, etc.

The bus 602 may include a path for transmitting information between the above components. The bus 602 may be a PCI (Peripheral Component Interconnect) bus or an EISA (Extended Industry Standard Architecture) bus. The bus 602 may be divided into an address bus, a data bus, a control bus, and so on. For ease of illustration, it is only indicated by only a single thick line in FIG. 6, but this does not indicate that there is only one bus or only one type of bus.

The memory 603 may be a ROM (Read Only Memory) or other types of static storage devices that can store static information and instructions, a RAM (Random Access Memory) or other types of dynamic storage device that can store information and instructions, or an EEPROM (Electrically Erasable Programmable Read Only Memory), a CD-ROM (Compact Disc Read Only Memory) or other optical disk storages, optical disk storages (including compact discs, laser discs, optical discs, digital versatile discs, Blu-ray discs, etc.), a magnetic disk storage medium or other magnetic storage devices, or any other medium that can be used to carry or store desired program codes in the form of instructions or data structures and can be accessed by a computer, but is not limited thereto.

The memory 603 is configured to store application codes for executing the solution of the present disclosure, and the execution is controlled by the processor 601. The processor 601 is configured to execute the application codes stored in the memory 603 to implement the contents shown in the above method embodiments.

The electronic device includes, but is not limited to, a mobile terminal such as a mobile phone, a laptop computer, a digital broadcast receiver, a PDA (personal digital assistant), a PAD (tablet computer), a PMP (portable multimedia player), and an in-vehicle terminal (e.g., in-vehicle navigation terminal), as well as fixed terminal such as digital TV and a desktop computer. The electronic device shown in FIG. 6 is merely an example and should not limit the functionality or use scope of the embodiments of the present disclosure.

The server provided in the present disclosure may be an independent physical server, or a server cluster or distributed system composed of multiple physical servers. It may also be a cloud server that provides basic cloud computing services such as cloud services, cloud databases, cloud computing, cloud functions, cloud storage, network services, cloud communications, middleware services, domain name services, security services, CDN, and big data and artificial intelligence platforms. The terminal may be a smartphone, tablet computer, notebook computer, desktop computer, smart speaker, smart watch, etc., but is not limited to these. The terminal and the server may be directly or indirectly connected via wired or wireless communication, which is not limited in the present disclosure.

An embodiment of the present disclosure provides a computer-readable storage medium having a computer program stored thereon, and the computer-readable storage medium, when running on a computer, causing the computer to execute the corresponding contents in the aforementioned method embodiments.

It should be understood that although the steps in the flowcharts of the accompanying drawings are shown in sequence as indicated by the arrows, these steps are not necessarily executed in the order indicated by the arrows. Unless otherwise specified herein, there is no strict order restriction on the execution of these steps, and they can be executed in other orders. Moreover, at least some of the steps in the flowcharts of the accompanying drawings may include multiple sub-steps or multiple stages, and these sub-steps or stages are not necessarily executed and completed at the same time, but can be executed at different times, and their execution order is not necessarily sequential, but can be executed in turn or alternately with other steps or at least part of the sub-steps or stages of other steps.

It should be noted that the computer-readable medium described above in the present disclosure may be a computer-readable signal medium or a computer-readable storage medium, or any combination thereof. The computer-readable storage media may include, for example, but is not limited to, electrical, magnetic, optical, electromagnetic, infrared, or semiconductor systems, apparatuses, or devices, or any combination thereof. More specific examples of the computer-readable storage media may include, but are not limited to, an electrical connection having one or more conducting wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that can be used by or in conjunction with an instruction execution system, apparatus, or device. In the present disclosure, the computer-readable signal medium may include a data signal propagated in baseband or as part of a carrier wave, which carries computer-readable program codes. Such a propagated data signal may take a variety of forms, including, but not limited to, an electromagnetic signal, an optical signal, or any suitable combination thereof. The computer-readable signal medium may also be any computer-readable medium other than the computer-readable storage medium that can transmit, propagate, or transport a program for use by or in connection with an instruction execution system, apparatus, or device. The program codes embodied on the computer-readable medium may be transmitted using any suitable medium, including but not limited to a wire, an optical cable, a RF (radio frequency), or any suitable combination thereof.

The computer-readable medium may be included in the electronic device, or may exist independently without being incorporated into the electronic device.

The computer-readable medium carries one or more programs. When the one or more programs are executed by the electronic device, the electronic device is caused to perform the method shown in the above embodiments.

According to an aspect of the present disclosure, a computer program product or computer program is provided, the computer program product or computer program includes computer instructions stored in a computer-readable storage medium. A processor of a computer device reads the computer instructions from the computer-readable storage medium and executes the computer instructions, to cause the computer device to perform the methods provided in the various optional implementations described above.

The computer program codes for performing the operations of the present disclosure may be written in one or more programming languages, or a combination thereof, including object-oriented programming languages such as Java, Smalltalk and C++, and conventional procedural programming languages such as "C" or similar programming languages. The program codes may be executed entirely on the user's computer, partially on the user's computer, as a stand-alone software package, partially on the user's computer and partially on a remote computer, or entirely on a remote computer or server. In cases involving a remote computer, the remote computer may be connected to the user's computer through any type of network, including a local area network (LAN) or a wide area network (WAN), or may be connected to an external computer (e.g., through Internet from an Internet service provider).

The flowcharts and block diagrams in the accompanying drawings illustrate architecture, functions and operations of the possible implementations of the systems, methods and computer program products according to various embodiments of the present disclosure. In this regard, each box in the flowcharts or block diagrams can represent a module, a program segment, or a part of codes, and the module, program segment, or part of codes contains one or more executable instructions for realizing the specified logical function. It should also be noted that in some alternative implementations, the functions marked in the boxes can also occur in a different order than that marked in the accompanying drawings. For example, two boxes represented in succession can actually be executed substantially in parallel, and they can sometimes be executed in the opposite order, depending on the functions involved. It should also be noted that each box in the block diagrams and/or flowcharts, and the combination of the boxes in the block diagrams and/or flowcharts, can be implemented using a dedicated hardware-based system that performs the specified functions or operations, or can be implemented using a combination of dedicated hardware and computer instructions.

The modules involved in the embodiments of the present disclosure may be implemented in software or hardware. In some cases, the name of a module does not constitute a definition on the module itself. For example, module A may also be described as "module A for performing operation B".

Those described above are merely illustration of preferred embodiments of the present disclosure and the technical principles employed. Those skilled in the art should understand that the scope of the present disclosure is not limited to technical solutions from specific combinations of the aforementioned technical features, and it also encompasses other technical solutions obtained by any combination of the aforementioned technical features or their equivalents, without departing from the scope of the above disclosed ideas. For example, a technical solution formed by replacing the aforementioned features with (but not limited to) technical features with similar functions disclosed in this disclosure.

## Claims

1. A sleep mechanism negotiation method, applied to a station (STA), the method comprising:
receiving a first wireless frame sent by a first access point (AP); wherein the first wireless frame comprises first identification information, and the first identification information identifies first maximum BSS idle period parameter information of the first AP and second maximum BSS idle period parameter information of a second AP;
wherein the first AP and the second AP belong to different physical entities; and
after the STA establishes an initial association with the first AP, a first MAX BSS idle period timer performs timing, and a second MAX BSS idle period timer does not perform timing.

2. The sleep mechanism negotiation method according to claim 1, wherein after the STA transitions from the first AP to the second AP, the second MAX BSS idle period timer performs timing and the first MAX BSS idle period timer stops timing.

3. The sleep mechanism negotiation method according to claim 1, wherein before receiving the first wireless frame sent by the first AP, the method further comprises:
determining a second wireless frame; wherein the second wireless frame comprises a listen interval parameter, and time indicated by the listen interval parameter is less than time indicated by the first MAX BSS idle period parameter and the second MAX BSS idle period parameter; and
sending the second wireless frame.

4. The sleep mechanism negotiation method according to claim 3, wherein the STA is affiliated with a non-access point multi-link device (non-AP MLD), and the listen interval parameter is sent to the second AP through the first AP; and
after the STA establishes the initial association with the first AP, a listen interval timer corresponding to the first AP performs timing, and a listen interval timer corresponding to the second AP does not perform timing.

5. The sleep mechanism negotiation method according to claim 4, wherein after the STA transitions from the first AP to the second AP, the listen interval timer corresponding to the second AP performs timing, and the listen interval timer corresponding to the first AP stops timing.

6. The sleep mechanism negotiation method according to any one of claims 1 to 5, wherein the first identification information comprises a MAX BSS idle period information element;
in a case where the first MAX BSS idle period parameter is the same as the second MAX BSS idle period parameter, the first identification information comprises a MAX BSS idle period information element; and
in a case where the first MAX BSS idle period parameter is different from the second MAX BSS idle period parameter, the first identification information comprises a MAX BSS idle period information element corresponding to each MAX BSS idle period parameter.

7. A sleep mechanism negotiation method, applied to a first AP, the method comprising:
determining a first wireless frame; wherein the first wireless frame comprises first identification information, and the first identification information identifies a first MAX BSS idle period parameter of the first AP and a second MAX BSS idle period parameter of a second AP;
wherein the first AP and the second AP belong to different physical entities; after a station (STA) establishes an initial association with the first AP, a first MAX BSS idle period timer performs timing, and a second MAX BSS idle period timer does not perform timing; and
sending the first wireless frame.

8. The sleep mechanism negotiation method according to claim 7, wherein after the STA transitions from the first AP to the second AP, the second MAX BSS idle period timer performs timing and the first MAX BSS idle period timer stops timing.

9. The sleep mechanism negotiation method according to claim 7, wherein before determining the first wireless frame sent by the first AP, the method further comprises:
receiving a second wireless frame sent by the STA; wherein the second wireless frame comprises a listen interval parameter, and time indicated by the listen interval parameter is less than time indicated by the first MAX BSS idle period parameter and the second MAX BSS idle period parameter.

10. The sleep mechanism negotiation method according to claim 9, wherein the STA is affiliated with a non-AP MLD; and the listen interval parameter is sent to the second AP; and
after the STA establishes an initial association with the first AP, a listen interval timer corresponding to the first AP performs timing, and a listen interval timer corresponding to the second AP does not perform timing.

11. The sleep mechanism negotiation method according to claim 10, wherein after the STA transitions from the first AP to the second AP, the listen interval timer corresponding to the second AP performs timing, and the listen interval timer corresponding to the first AP stops timing.

12. The sleep mechanism negotiation method according to any one of claims 7 to 11, wherein the first identification information comprises a MAX BSS idle period information element;
in a case where the first MAX BSS idle period parameter is the same as the second MAX BSS idle period parameter, and the first identification information comprises a MAX BSS idle period information element; and
in a case where the first MAX BSS idle period parameter is different from the second MAX BSS idle period parameter, the first identification information comprises a MAX BSS idle period information element corresponding to each MAX BSS idle period parameter.

13. An electronic device, wherein the electronic device is a STA, and the electronic device comprises:
a receiving module, configured to receive a first wireless frame sent by a first AP; wherein the first wireless frame comprises first identification information, and the first identification information identifies first maximum BSS idle period parameter information of the first AP and second maximum BSS idle period parameter information of a second AP;
the first AP and the second AP belong to different physical entities; and
a timing module, configured to cause a first MAX BSS idle period timer to perform timing and a second MAX BSS idle period timer not to perform timing after the STA establishes an initial association with the first AP.

14. An electronic device, wherein the electronic device is a first AP, and the electronic device comprises:
a determination module, configured to determine a first wireless frame; wherein the first wireless frame comprises first identification information, and the first identification information identifies a MAX BSS idle period parameter of the first AP and a MAX BSS idle period parameter of a second AP;
wherein the first AP and the second AP belong to different physical entities; after a STA establishes an initial association with the first AP, a first MAX BSS idle period timer performs timing, and a second MAX BSS idle period timer does not perform timing; and
a sending module, configured to send the first wireless frame.

15. An electronic device, comprising a memory, a processor, and a computer program stored in the memory and executable on the processor, wherein the processor, when executing the program, implements the method according to any one of claims 1 to 6 or the method according to any one of claims 7 to 12.

16. A computer-readable storage medium, wherein the computer-readable storage medium has a computer program stored thereon, and the computer program, when being executed by a processor, implements the method according to any one of claims 1 to 6 or the method according to any one of claims 7 to 12.
